# EUROPÄISCHE PATENTSCHRIFT

(11) **EP 3 210 088 B1**
(45) Veröffentlichungstag und Bekanntmachung des Hinweises auf die Patenterteilung: **13.11.2019**
(21) Anmeldenummer: 15763905.5
(22) Anmeldetag: 15.09.2015
(51) Int. Cl.: G05B 23/02

(54) **VERFAHREN UND ASSISTENZSYSTEM ZUR ERKENNUNG EINER STÖRUNG IN EINER ANLAGE**
METHOD AND ASSISTANCE SYSTEM FOR RECOGNISING A FAULT IN A SYSTEM
PROCÉDÉ ET SYSTÈME D'ASSISTANCE POUR LA DÉTECTION D'UNE DÉFAILLANCE DANS UNE INSTALLATION

(30) Priorität: 21.11.2014 DE 102014223810
(43) Veröffentlichungstag der Anmeldung: 30.08.2017
(73) Patentinhaber: Siemens Aktiengesellschaft, 80333 München (DE)
(72) Erfinder: WEBER, Stefan Hagen, 81927 München (DE); DONALD, John Andrew, 85635 Höhenkirchen-Siegertsbrunn (DE)
(86) Internationale Anmeldenummer: PCT/EP2015/071019
(87) Internationale Veröffentlichungsnummer: WO 2016/078791

(56) Entgegenhaltungen:
- EP-A1- 2 521 083
- EP-A2- 2 520 994
- US-A1- 2009 100 293
- US-A1- 2010 114 390

## Beschreibung

Die Erfindung betrifft ein Verfahren und ein Assistenzsystem zur Erkennung einer Störung in einer Anlage durch eine Detektion von Lastkurven mit anomalem Verlauf aus einer Vielzahl von Lastkurven, wobei eine Lastkurve den Verlauf einer Kenngröße über einen Wertebereich eines Parameters jeweils einer Komponente der Anlage darstellt.

Heutige Fertigungsanlagen weisen einen hohen Automatisierungsgrad auf, wobei zum Beispiel durch Feldgeräte Abläufe gesteuert und kontrolliert werden. Dazu werden Feldgeräte unterschiedlichen Typs zur Steuerung verschiedener Aufgaben eingesetzt, wie beispielsweise zur Steuerung des Durchflusses eines Mediums durch Zuleitungen, zur Regelung der Temperatur oder auch des Druckes und vieles mehr. Dabei können Feldgeräte gleichen Typs in unterschiedlichen Fertigungsschritten für unterschiedliche Aufgaben eingesetzt werden. Es werden aber auch beispielsweise Feldgeräte unterschiedlichen Typs, wie beispielsweise ein Temperatursensor oder ein Durchflussmesser, in einem Fertigungsschritt eingesetzt. Diese Feldgeräte umfassen üblicherweise Mikroprozessoren und sind an ein Kommunikationsnetz der Fertigungsanlage angeschlossen. Häufig zeichnen solche Feldgeräte Lastkurven auf, die jeweils den Verlauf der gesteuerten Kenngröße über einen Wertebereich eines Parameters der jeweiligen Komponente, hier des Feldgeräts, darstellen. Dies kann beispielsweise die Temperatur oder der Druck gemessen über die Zeit sein. Es kann aber auch die vorliegende Temperatur eines Mediums über einen Druckverlauf aufgezeichnet werden. Solche Lastkurven können im Gerät beispielsweise in regelmäßigen Abständen an ein Überwachungssystem über das Kommunikationsnetz der Anlage übertragen werden.

Treten Unregelmäßigkeiten im Ablauf der Fertigungsanlage ohne konkreten Hinweis auf die Störungsstelle auf, so können die ermittelten Lastkurven evtl. einen Hinweis auf die Störungsstelle oder auch Einzelheiten zur Störung selbst geben. Da eine Automatisierungsanlage typischerweise viele Komponenten, aufweist, ist es nahezu unmöglich, aus dieser großen Anzahl von gelieferten Lastkurven, diejenigen herauszufinden, die defekt oder gestört sind.

Als Anlagen werden ebenfalls Stromverteilungs- oder auch Wasserverteilungsanlagen bzw. -netze bezeichnet. Auch dort werden beispielsweise eine Durchflussmenge pro Zeit an Wasser bzw. der übertragene elektrische Strom pro Zeit in Fernleitungen, in Ortverteilungszuleitungen oder die entnommene elektrische Leistung pro Zeit in Verbraucheranschlussleitungen als Lastkurven über die Zeit aufgenommen. In solchen Anlagen kommt es beispielsweise durch defekte Wasser- oder Stromleitungen, durch unerlaubte Entnahme oder insbesondere in Stromverteilungsnetzen durch fehlerhafte angeschlossene Komponenten bzw. Geräte zu einer ungewollten Entnahme bzw. Störung. Auch hier sind Lastkurven, d.h. die entnommene Stromleistung bzw. Wassermenge über die Zeit detektierbar. In intelligenten Stromverteilungsnetzen wird heute bereits der Stromverbrauch von Kunden in relativ kurzen Zeitabständen aufgenommen und, üblicherweise über eine Anzahl von Nutzern aggregiert, an Leitstellen übermittelt. Wiederkehrende Unregelmäßigkeiten sollten frühzeitig erkannt, die Ursachen der Unregelmäßigkeiten analysiert und erkannte Störungen behoben bzw. Missbrauch abgestellt werden.

Auch hier ist eine Verwendung von bereits verfügbaren Lastkurven zur Analyse der Störung und Überprüfung der Anlage sehr problematisch, da häufig eine große Anzahl von Komponenten und somit Lastkurven zur Analyse bzw. Lokalisierung zu der Störung untersucht werden müssen. Dabei weist nicht jeder unerwartete und somit anomale Verlauf einer Lastkurve auf einen Defekt oder eine Störung hin. Der anomale Verlauf kann auch durch die Verwendung der Komponente, deren Lastkurve betrachtet wird, in einem unterschiedlichen Fertigungsschritt oder, bei Stromlastkurven von Endverbrauchern durch eine unterschiedliche Art des Endverbrauchers, beispielsweise einem Bäcker- gegenüber einem Schreinerbetrieb oder einem Privathaushalt, begründet sein.

Aus der EP 2 521 083 A1 ist ein System und Verfahren für eine Benchmarkanalyse von Kraftwerken bekannt. Es werden Betriebsdaten von Kraftwerken analysiert, wobei Berichtsbögen, sogenannte "scorecard summaries", über Betriebseigenschaften von verschiedenen Betriebsebenen erstellt werden, wobei die Berichtsbögen eine Zusammenfassung von identifizierten Eigenschaften einer bestimmten Komponente enthalten. Die Berichtsbögen können beispielsweise für eine statistische Auswertung, wie z.B. die Detektion von Ausreißern gegenüber vorkonfigurierten Betriebsstandards, oder zur Gruppierung von Kraftwerken mit ähnlichen Betriebseigenschaften genutzt werden.

Eine Untersuchung von beispielsweise temporalen Daten, also Lastkurven die den zeitlichen Verlauf einer Kenngröße angeben, auf anomalen Verlauf beschränkt sich derzeit meist auf die Betrachtung von einzelnen Zeitreihen, ohne diese im Zusammenhang mit anderen, ähnlichen Zeitreihen zu sehen. Eine typische Herangehensweise ist, anhand von Vergangenheitswerten einer Zeitreihe zu erwartende Werte zu berechnen und mit Ist-Werten zu vergleichen. Ist die Abweichung zu groß, so unterstellt man zunächst, dass es sich bei den Werten um einen Ausreißer, auch Outlier genannt, handelt. Bei zu vielen Au-ßenreißern in kurzer Zeit kann auf eine Anomalie, d.h. einen anomalen Verlauf der Lastkurve geschlossen werden. Dabei wird die Anomalie einzeln per Lastkurve berechnet und nicht im Kontext zu anderen bzw. ähnlichen Kurven gesehen.

Es ist somit die Aufgabe der vorliegenden Erfindung, ein Verfahren und eine Vorrichtung zu schaffen, um Störungen einer Anlage aus einer Vielzahl von Lastkurven einer Anlage zu ermitteln und darüber die Art der Störung oder eine Lokalisierung der Störung und eine Überprüfung der Anlage zu ermöglichen.

Das erfindungsgemäße Verfahren gemäß Anspruch 1 zur Erkennung einer Störung in einer Anlage nutzt eine Detektion von Lastkurven mit anomalem Verlauf aus einer Vielzahl von Lastkurven, wobei eine Lastkurve den Verlauf einer Kenngröße über einen Parameterbereich jeweils einer Komponente der Anlage darstellt.

Dieses Verfahren hat den Vorteil, dass nicht jede Lastkurve mit der Gesamtheit der weiteren vorhandenen Lastkurven verglichen wird, sondern über eine vorherige Einteilung oder auch Gruppierung von Lastkurven in Gruppen von untereinander ähnlichen Lastkurven eine Vorsortierung erfolgt und lediglich innerhalb dieser Gruppe Lastkurven mit anomalem Verlauf in Bezug auf die Lastkurven dieser Gruppen ermittelt werden. Somit können auch kleinere Abweichungen festgestellt werden, die lediglich in Bezug auf die bereits als ähnlich identifizierten Lastkurven einer Gruppe erkannt werden.

Gemäß der Erfindung wird aus einer vorbestimmten Anzahl von Standardprofilen jeweils eine Gruppe für jedes einzelne Standardprofil bereitgestellt.

Dies hat den Vorteil, dass Vorwissen über die Struktur der Anlage in Form von unterschiedlichen Standardlastprofilen für die verschiedenen Komponenten der Anlage zur Ermittlung der Gruppen verwendet werden kann. Dabei können die Standardlastprofile als Referenzkurven dienen und ermöglichen somit eine Bildung von gewünschten Gruppen.

Gemäß der Erfindung wird für jede der eingelesenen Lastkurven ein erster Ähnlichkeitswert zu jedem Standardlastprofil berechnet und die eingelesene Lastkurve derjenigen Gruppe zugeordnet, zu der der größte erste Ähnlichkeitswert ermittelt wurde.

Dies hat den Vorteil, dass jede Lastkurve nur einer einzigen Gruppe zugeordnet wird und Mehrfachzuordnungen verhindert werden.

Gemäß der Erfindung wird eine Anzahl von Gruppen automatisiert mit Hilfe eines insbesondere nicht-überwachten Clustering-Algorithmus für Lastkurven mit ähnlichem Verlauf ermittelt.

Diese hat den Vorteil, dass eine Gruppierung auch dann durchgeführt werden kann, wenn keine Information zur Strukturierung der Komponenten der Anlage vorliegt.

Gemäß der Erfindung wird ein zweiter Ähnlichkeitswert für jede Lastkurve einer Gruppe gegenüber einem Mittelwert aller restlichen Lastkurven einer Gruppe berechnet und diejenigen Lastkurven als anomale Lastkurven erkannt, deren zweiter Ähnlichkeitswert einen vorbestimmten Wert unterschreiten.

Somit kann in einem zweiten Schritt aus jeder Gruppe von bereits ähnlichen Lastkurven noch einmal eine Ähnlichkeitsüberprüfung durchgeführt werden. Somit werden insbesondere die Kurven, die von dem Verlauf der Lastkurven in der Gruppe abweichen, als anomal und zwar gegenüber dieser Gruppe von Lastkurven identifiziert. Somit kann eine Differenzierung insbesondere gegenüber der Gruppe ermittelt und auch geringere Anomalien erkannt werden.

In einer vorteilhaften Variante wird jeweils ein Distanzmaß, insbesondere ein Pearson-Korrelationskoeffizient, zur Berechnung des ersten und des zweiten Ähnlichkeitswertes verwendet.

Durch die Verwendung eines Distanzmaßes kann die Art der Ähnlichkeit, die gesucht wird, ausgewählt werden. Bei einem Pearson-Korrelationskoeffizienten als Distanzmaß wird insbesondere der Verlauf der Kurve über den Parameterbereich bewertet, nicht aber wie nahe beieinander die betrachtete Kurve einer Referenzkurve liegt. Durch die Wahl des Distanzmaßes kann somit Einfluss auf die Art der gewünschten Ähnlichkeit genommen werden. Für den ersten Ähnlichkeitswert und den zweiten Ähnlichkeitswert kann das gleiche Distanzmaß oder auch unterschiedliche Distanzmaße gewählt werden.

In einer vorteilhaften Ausführungsform des erfindungsgemäßen Verfahrens wird für die Ermittlung anomaler Lastkurven ein Analysebereich gewählt, der ein Teilbereich des gesamten Parameterbereichs der Lastkurven ist und auf den die Ermittlung anomaler Lastkurven eingeschränkt wird. Es wird desweiteren eine Breite eines Analysefensters und eine Schrittweite aufeinanderfolgender Analysefenster gewählt und der gesamte Analysebereich wird durch mit der ausgewählten Schrittweite aufeinanderfolgenden Analysefenstern überdeckt und für jedes Analysefenster wird jeweils ein Ähnlichkeitswert berechnet.

Durch die Auswahl des Analysebereichs, der Breite eines Analysefensters und die Schrittweite aufeinanderfolgender Analysefenster kann die Anomalie-Detektion auf vorgegebene Bereiche eingeschränkt werden, in denen beispielsweise der Verdacht einer Störung bereits besteht. Es kann auch die Granularität der Anomalie-Detektion je nach Bedarf eingestellt werden.

In einer vorteilhaften Ausführungsform des erfindungsgemäßen Verfahrens wird als Information zu jeder der ermittelten anomalen Lastkurven innerhalb einer Gruppe jeweils
- ein Varianz-Wert der zweiten Ähnlichkeitswerte ermittelt über den Analysebereich pro Lastkurve und/oder
- eine Rangstelle der anomalen Lastkurve aus einem Vergleich der Varianz-Werte der ermittelten anomalen Lastkurven ermittelt, und/oder
- einen Minimalwert der zweiten Ähnlichkeitswerte im Analysebereich pro Lastkurve ermittelt, und/oder
- einen maximalen Differenzwert von zwei zweiten Ähnlichkeitswerten pro Lastkurve ermittelt, sowie die zweiten Ähnlichkeitswerte und/oder eine Varianzentwicklung über den Wertebereich des betrachteten Parameters der zweiten Ähnlichkeitswerte einer oder mehrerer anomalen Lastkurven über den Analysebereich an die Ausgabeeinheit ausgegeben.

Dies hat den Vorteil, dass die Art der Anomalie anhand der ausgegebenen Informationen weiter analysiert werden kann. Die genannten Ausgabewerte stellen signifikante Größen für die Anomalie der detektierten anomalen Lastkurven dar.

In einer vorteilhaften Ausführungsform werden auch nach einem Ermitteln von anomalen Lastkurven weitere zusätzliche Lastkurven eingelesen und die Verfahrensschritte des Zuordnens, des Ermittelns und der Ausgabe basierend auf der Gesamtheit von Lastkurven umfassend die Vielzahl von Lastkurven und die weiteren Lastkurven durchgeführt.

Somit können auch Lastkurven, die bei der ursprünglichen Anomalie-Detektion nicht berücksichtigt wurden, im Nachhinein in die Gruppen von Lastkurven eingeordnet und deren Anomalie bezüglich der Gesamtheit der Lastkurven in der Gruppe ermittelt werden.

In einer vorteilhaften Variante geben die Lastkurven einen zeitlichen Verlauf eines Stromverbrauchs oder eines Wasserverbrauchs in einer Strom- oder Wasserverteilungsanlage oder in einer Industrieanlage an.

Das erfindungsgemäße Assistenzsystem gemäß Anspruch 8 zur Erkennung einer Störung in einer Anlage durch eine Detektion von Lastkurven mit anomalem Verlauf aus einer Vielzahl von Lastkurven, wobei eine Lastkurve einen Verlauf einer Kenngröße über einen Parameterbereich jeweils einer Komponente der Anlage darstellt, umfasst eine Datenschnittstelle, eine Gruppierungseinheit, eine Anomalie-Erkennungseinheit und eine Ein- und Ausgabeeinheit.

Das erfindungsgemäße Analysesystem hat den Vorteil, dass beliebige eingelesene Lastkurven, die jeweils den Verlauf einer Kenngröße gegenüber einem Parameterbereich darstellen, zu kategorisieren und eine detaillierte Anomalie-Detektion basierend auf den Lastkurven in jeweils einer Gruppe durchzuführen und diese zur weiteren Auswertung oder zur Behebung der Störung beispielsweise an die Anlage auszugeben. Ein solches Assistenzsystem erlaubt eine direkte Rückkopplung an die Anlage und somit Mittel zur schnellen Analyse und Behebung von Störungen.

In einer vorteilhaften Ausführungsform des Assistenzsystems ist die Ein- und Ausgabeeinheit derart ausgebildet, eine Eingabe
- eines ausgewählten Analysebereich, der einen Teilbereich des gesamten Parameterbereichs der Lastkurven ist und auf den die Ermittlung anomaler Lastkurven eingeschränkt wird,
- eine Breite eines Analysefensters und/oder
- eine ausgewählte Schrittweite aufeinanderfolgender Analysefenster durchzuführen. Die Ein- und Ausgabeeinheit ist des Weiteren derart ausgebildet, die Ausgabe zu ermöglichen für
- einen Varianz-Wert der zweiten Ähnlichkeitswerte, der über den Analysebereich pro Lastkurve ermittelt wird,
- eine Rangstelle der anomalen Lastkurven, die aus einem Vergleich der Varianz-Werte der ermittelten anomalen Lastkurven ermittelt wird und/oder
- einen Minimalwert der zweiten Ähnlichkeitswerte (Wi(t)), der im Analysebereich pro Lastkurve ermittelt wird, und/oder
- einen Wert der maximalen Differenz von zwei zweiten Ähnlichkeitswerten pro Lastkurve, sowie die zweiten Ähnlichkeitswerte und/oder eine Varianzentwicklung der zweiten Ähnlichkeitswerte einer oder mehrerer Lastkurven über den Analysebereich.

Das Assistenzsystem kann somit Eingaben beispielsweise von Bedienpersonal oder auch einem weiteren Überwachungssystem einlesen und somit die Anomalie-Detektion mit geänderten Parametern durchführen. Somit kann beispielsweise der Parameterbereich der Lastkurve auf besonders auffällige Parameterbereiche beschränkt und/oder dort mit geringerer Schrittweite und somit feingranular durchgeführt werden. Des Weiteren werden aussagekräftige Werte zur Anomalie einer anomalen Lastkurve angezeigt und können zur weiteren Analyse oder auch zu einer Änderung der Analysebereiche bzw. Fenstergröße verwendet werden.

Des Weiteren wird ein Computerprogrammprodukt mit Programmbefehlen zur Durchführung des vorgenannten Verfahrens beansprucht.

Des Weiteren wird ein Datenträger, der das Computerprogrammprodukt speichert, beansprucht.

Ausführungsbeispiele des erfindungsgemäßen Verfahrens sowie des erfindungsgemäßen Assistenzsystems sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens als Ablaufdiagramm;
- Figur 2: ein Ausführungsbeispiel eines erfindungsgemäßen Assistenzsystems in schematischer Darstellung; und
- Figur 3: eine beispielhafte Ausgabedarstellung einer erfindungsgemäßen Ein- und Ausgabeeinheit des Assistenzsystems ebenfalls in schematischer Darstellung.

Einander entsprechende Teile sind in allen Figuren mit den gleichen Bezugszeichen versehen.

In einer Anlage, wie beispielsweise einer Industrieanlage oder einer Fertigungsanlage oder aber auch Elektrizitäts- oder Wasserverteilungsnetzen, werden beispielsweise durch Feldgeräte oder auch Verbrauchsmesser Lastkurven über einen Parameterwert, wie beispielsweise die Zeit oder den Druck, aufgenommen. Um Störungen oder einen unerlaubten Eingriff in eine Anlage oder eine unerlaubte Entnahme von Elektrizität oder Wasser in einem Verteilungsnetz zu erkennen, können diese Lastkurven von einem Assistenzsystem auf Anomalien bei den Lastkurven untersucht werden und somit diejenigen Komponenten, die die Lastkurven erzeugt haben, ermittelt werden. Die Komponenten können daraufhin verändert bzw. ein Missbrauch behoben werden.

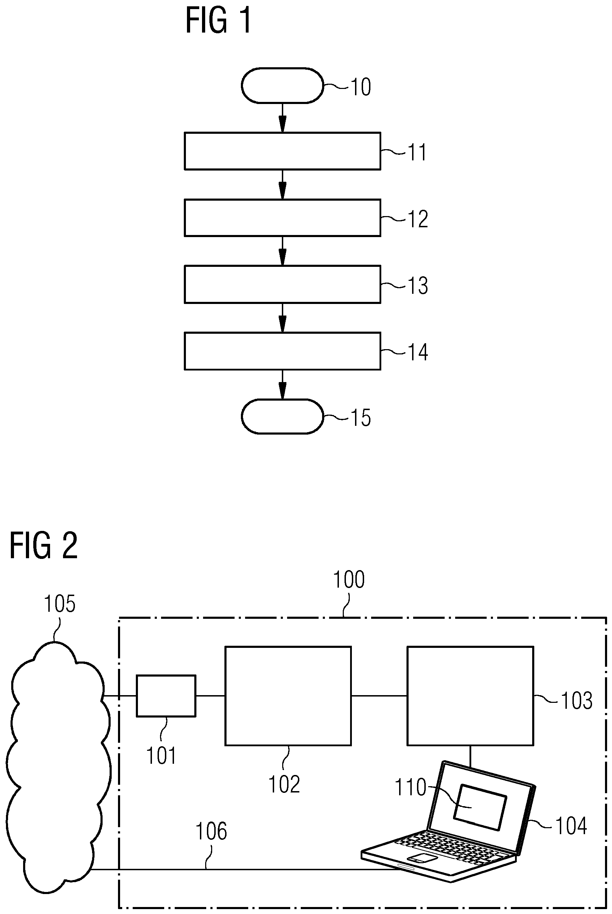

In Figur 1 sind die verschiedenen Verfahrensschritte zur Erkennung einer Störung in einer Anlage durch eine Detektion von Lastkurven mit anomalem Verlauf schematisch dargestellt. Im Ausgangszustand 10 liegen eine Vielzahl von Lastkurven vor, wobei jede Lastkurve von einer bestimmten Komponente der Anlage generiert wurde. Die Lastkurven können beispielsweise in einem Überwachungszentrum der Anlage bereits vorliegen oder diese Lastkurven werden bei Bedarf von den Komponenten abgerufen. Im Verfahrensschritt 11 wird nun diese Vielzahl von Lastkurven beispielsweise über eine Datenschnittstelle in ein Assistenzsystem eingelesen.

Im Verfahrensschritt 12 werden die Lastkurven nun gruppiert. Dazu werden mehr als eine Gruppe bereitgestellt, die jeweils Lastkurven mit ähnlichem Verlauf aufnehmen soll. Liegt Vorwissen über die Anlage bzw. die Komponenten der Anlage und somit auch über die von ihnen gelieferten Lastkurven vor, so können z.B. typische Standardlastprofile definiert werden. Pro Standardlastprofil kann nun eine Gruppe gebildet werden. Die gegebenen Standardlastprofile dienen dabei als Referenzkurven. Die Anzahl der ermittelten Gruppen entspricht dann der Anzahl der Standardlastprofile oder aber es können auch mehrere Standardlastprofile zu einer Gruppe zugeordnet werden. Nach der Ermittlung der Gruppen wird im Verfahrensschritt 13 jede der eingelesenen Lastkurven einer der ermittelten Gruppe zugeordnet, indem für jede der eingelesenen Lastkurven ein erster Ähnlichkeitswert zu jedem Standardlastprofil berechnet wird, und die eingelesene Lastkurve derjenigen Gruppe zugeordnet wird, für die der größte erste Ähnlichkeitswert ermittelt wurde.

Häufig sind keine Rahmenbedingungen oder genauere Kenntnisse der Anlage bzw. der Einsatzbereiche der einzelnen Komponenten in den Anlagen bekannt oder es sollen keine grundlegenden Annahmen oder Kontextdaten in die Anomalie-Erkennung einbezogen werden. In diesem Fall werden mit Hilfe eines Clustering-Algorithmus automatisiert Gruppen für Lastkurven mit ähnlichem Verlauf ermittelt. Unter einem Clustering-Algorithmus versteht man ein Verfahren zur Entdeckung von Ähnlichkeitsstrukturen in großen Datenbeständen. Die gefundenen Gruppen von ähnlichen Objekten, hier Lastkurven, werden als Cluster, die Gruppenzuordnung häufig auch als Clustering bezeichnet. Es existieren verschiedene Clustering-Algorithmen, die sich vor allem in ihrem Ähnlichkeits- und Gruppenbegriff sowie ihrem algorithmischen Vorgehen und der Toleranz gegenüber Störungen in den Daten unterscheiden.

Die Wahl des Clustering-Algorithmus und dessen Parametrisierung haben großen Einfluss darauf, was bei der Berechnung als ähnlich erachtet wird. Beispielsweise kann ein ungewichtetes Paargruppenverfahren mit arithmetischem Mittel, auch Unweighted Pair-Group Method with Arithmetic Mean Algorithmus UPGMA genannt, verwendet werden. Bei einem unüberwachten Algorithmus wird kein voraus bekanntes Ziel bzw. Gruppe vorgegeben. Es wird versucht in den Eingabedaten, hier den Lastkurven, Muster zu erkennen, die sich von einem strukturlosen Rauschen unterscheiden. Dem Clustering-Algorithmus wird als Eingabeparameter ein erster Ähnlichkeitswert vorgegeben, der eine Vorschrift zur Berechnung der Ähnlichkeit von Kurvenverläufen vorgibt. Ein solcher Ähnlichkeitswert wird häufig auch Distanzmaß genannt. Für eine Gruppierung von beispielsweise Stromlastkurven wird bevorzugt ein Pearson-Korrelationskoeffizient als Distanzmaß verwendet, welcher die Ähnlichkeit von Kurvenverläufen berechnet. Andere Distanzmaße, wie beispielsweise ein sogenanntes Cosine-Distanzmaß würde zu einer Gruppierung von Kurven führen, welche nahe beieinander liegen, aber durchaus unterschiedliche Tendenzen, d.h. Kurvenverläufe, aufweisen können. Der Vorteil dieses Clusterbasierten Ansatzes besteht in der völligen Unabhängigkeit von den Rohdaten. Dieser Ansatz kommt insbesondere in unbekannten Domänen zum Einsatz, über die keine weiteren Informationen vorliegen, welche zu einer Gruppierung führen könnte.

Im Verfahrensschritt 14 wird nun ein zweiter Ähnlichkeitswert für jede Lastkurve einer Gruppe gegenüber einem Mittelwert aller restlichen Lastkurven einer Gruppe berechnet und diejenigen Lastkurven als anomale Lastkurven erkannt, deren zweite Ähnlichkeitswerte einen vorbestimmten Wert unterschreiten. Ähnlichkeitswerte, beispielsweise bei der Verwendung des vorgenannten Pearson-Korrelationskoeffizienten, liegen im Wertebereich zwischen -1 für sehr unähnliche Kurven bis maximal +1 für sehr ähnliche Kurvenverläufe. Werden andere Distanzmaße bzw. Ähnlichkeitswerte verwendet, können andere Wertbereiche für die zweiten Ähnlichkeitswerte auftreten. Ein Schwellwert für die Unähnlichkeit muss dann entsprechend dem Wertebereich der verwendeten Ähnlichkeitswerte angepasst werden. Zur Berechnung des ersten und des zweiten Ähnlichkeitswertes wird jeweils ein Distanzmaß, beispielsweise der bereits genannte Pearson-Korrelationskoeffizient, verwendet. Es können für den ersten und den zweiten Ähnlichkeitswert jedoch auch unterschiedliche Distanzmaße verwendet werden.

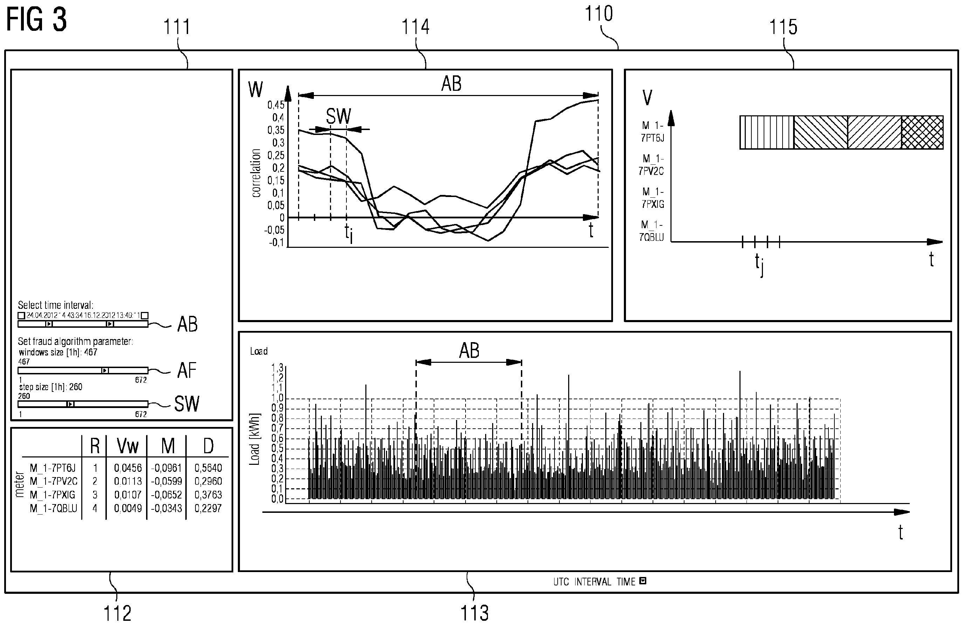

Häufig ist nicht der Verlauf der Kenngröße über den gesamten Parameterbereich, sondern lediglich in einem Teilbereich von Interesse. Dazu kann ein Analysebereich AB, siehe Fig.3, in dem die Lastkurve auf Anomalien untersucht wird, beispielsweise durch Angabe einer feste Ober- bzw. Untergrenze des Parameterbereiches festgelegt werden. Dadurch wird zusätzlich eine Verkürzung der Analysedauer bzw. geringere Anforderungen an die Prozessorkapazität eines entsprechenden Assistenzsystems erreicht. Damit ist es möglich, Lastkurven zu identifizieren, welche nur über einen bestimmten Parameterbereich Anomalien aufweisen. Somit kann beispielsweise ein zeitliches Muster einer missbräuchlichen Entnahme von Strom aus einer Stromverteilungsanlage identifiziert und somit weitere Rückschlüsse auf die Quelle der Störung ermittelt werden.

Da ein einziger zweiter Ähnlichkeitswert pro Lastkurve nicht ausreicht, um eine Anomalie, die beispielsweise nur temporär auftritt, sicher zu erkennen, erfolgt die Berechnung der Ähnlichkeit jeweils innerhalb eines Analysefensters AF, das eine vorher ausgewählte Breite des Parameterbereiches aufweist. Die Berechnung des zweiten Ähnlichkeitswertes W(ti) wird nun innerhalb eines Analysefensters berechnet. Danach wird das Analysefenster AF jeweils um eine ebenfalls vorher auswählbare Schrittweite weitergerückt und wiederum ein zweiter Ähnlichkeitswert W(ti) berechnet. Entsprechend wird das Analysefenster über den gesamten Analysebereich bewegt und pro Analysefenster AF ein zweiter Ähnlichkeitswert W(ti+1) berechnet.

Je schmäler die Breite des Analysefensters AF gewählt wird, desto genauer wird die Lastkurve über den Parameterbereich gescannt und jeweils ein zweiter Ähnlichkeitswert W(ti) berechnet. Somit ergibt sich für jede Lastkurve eine sich über den Analysebereich AB erstreckende Folge von zweiten Ähnlichkeitswerten W(ti), die nun eine Aussage über die Ähnlichkeit der betrachteten Lastkurve gegenüber einem Mittelwert der restlichen Lastkurven jeweils in dem zugrundeliegenden Analysefenster AF ist. Bei einem breit gewählten Analysefenster AF kann insbesondere eine langfristige Anomalie gut detektiert werden. Entsprechend sollte die Breite des Analysefensters AF schmäler gewählt werden, wenn kurzfristige Anomalien hier zu erwarten sind.

Die Schrittweite SW aufeinanderfolgender Analysefenster AF gibt an, wie feingranular der Ähnlichkeits-Algorithmus, für die Berechnung der zweiten Ähnlichkeitswerte W(ti) verwendet werden kann, über den Analysebereich AB berechnet wird. Eine kleine Schrittweite führt dazu, dass das gewählte Analysefenster AF in kleinen Schritten über den gesamten Wertebereich des Parameters wandert und somit eine hohe Anzahl von zweiten Analysewerten, die in Schrittweite SW aufeinanderfolgen, ermittelt werden, berechnet werden. Dies ergibt eine hohe "Auflösung" der Ähnlichkeit in Bezug auf den abgescannten Analysebereich AB. Die gleiche Granularität gilt dementsprechend auch für eine Varianzentwicklung V(tj), die aus den zweiten Ähnlichkeitswerten W(ti) über den Analysebereich AB berechnet wird. Es ist aber auch möglich die Fensterbreite und Schrittweite für die Berechnung der Varianzentwicklung unterschiedlich von der Breite des Analysefensters AF und Schrittweite SW für die zweite Ähnlichkeitsberechnung zu wählen.

Neben einer Darstellung der anomalen Lastkurve selbst kann eine Ausgabe von zusätzlicher Information zu jeder der ermittelten anomalen Lastkurven innerhalb einer Gruppe in Form von Indikatoren ermittelt werden. Ein solcher Indikator für eine Anomalie ist ein Varianz-Wert Vw der zweiten Ähnlichkeitswerte W(ti), der über den gesamten Analysebereich AB aggregiert für jede als anomal identifizierte Lastkurve berechnet wird. Dieser Varianz-Wert Vw gibt insbesondere ein Maß für stark schwankende Veränderungen der zweiten Ähnlichkeitswerte W(ti) an. Ein hoher Varianz-Wert Vw ist somit ein Maß für Kurven mit stark unterschiedlichem Verlauf.

Vorzugsweise wird auch eine Rangstelle R der betrachteten anomalen Lastkurve angegeben, die aus einem Vergleich der Varianz-Werte Vw der ermittelten anomalen Lastkurven ermittelt wird. Diese Rangstelle R gibt einen Anhaltswert für das Anomalie-Potential der betrachteten Lastkurve an. Die Rangstelle R ist dabei lediglich ein einziger Wert, der die gesamte als anomal ermittelte Lastkurve kennzeichnet.

Als weiterer Indikator wird das Minimum M der zweiten Ähnlichkeitswerte W(ti) im Analysebereich AB der Lastkurve ermittelt und als ein Zahlenwert ausgegeben. Dies ist ein Indikator für die Lastkurven mit den größten auftretenden Distanzen vom Gruppenmittel.

Als weiterer Indikator wird ein Wert für eine maximale Differenz D von zwei zweiten Ähnlichkeitswerten für jede ermittelte anomale Lastkurve berechnet. Die maximale Differenz D von zwei zweiten Ähnlichkeitswerten liefert insbesondere einen Hinweis auf die Lastkurven, welche stark von "sehr ähnlich" zu "sehr unähnlich" verlaufen. Diese Indikatoren liefern Information insbesondere zur Art der ermittelten Anomalie der Lastkurve.

Im Verfahrensschritt 15 ist die Gruppierung und Anomalie-Erkennung abgeschlossen. Anhand der ausgegebenen anomalen Lastkurven, der zweiten Ahnlichkeitswerte W(ti), deren Varianzentwicklung und der Indikatoren kann eine weitere Analyse in Bezug auf Störungen vorgenommen werden. Es können aber auch die Eingangsparameter Analysebereich AB, Breite des Analysefensters AF sowie Schrittweite SW verändert werden und der Verfahrensschritt der Ermittlung 14 von anomalen Lastkurven alleine durchgeführt werden oder in Kombination mit den Verfahrensschritten des Bereitstellens 12 von Gruppen und Gruppierens 13 durchgeführt werden.

Figur 2 zeigt nun ein Ausführungsbeispiel eines erfindungsgemäßen Assistenzsystems 100. Das Assistenzsystem 100 umfasst eine Datenschnittstelle 101, die mit einer Gruppierungseinheit 102 verbunden ist. Die Gruppierungseinheit 102 ist wiederum mit einer Anomalie-Erkennungseinheit 103 verbunden. Die Gruppierungseinheit 102 sowie die Anomalie-Erkennungseinheit 103 umfassen erste bzw. zweite Prozessoren, die derart ausgebildet sind, die oben genannten Verfahrensschritte auszuführen. Die Anomalie-Erkennungseinheit 103 wiederum ist mit der Ein- und Ausgabeeinheit 104 verbunden, die wiederum eine Verbindung 106 zur Anlage 105 aufweist. Über die Datenschnittstelle 101 werden die einzelnen Lastkurven, die von Komponenten der Anlage 105 ermittelt und an die Datenschnittstelle übertragen werden, eingelesen. Die eingelesenen Lastkurven werden nun optional in einem Datenspeicher, der hier nicht dargestellt ist, abgespeichert.

Die Gruppierungseinheit 102 weist einen ersten Prozessor auf, der derart ausgebildet ist, mehr als eine Gruppe mit jeweils einer Gruppe für Lastkurven mit ähnlichem Verlauf bereitzustellen, und jede der eingelesenen Lastkurven einer Gruppe zuzuordnen.

Die Anomalie-Erkennungseinheit 103 weist einen oder mehrere zweite Prozessoren auf, die derart ausgebildet sind, innerhalb jeder einzelnen Gruppe anomale Lastkurven zu ermitteln. Dabei können beispielsweise lediglich die Lastkurven der betrachteten Gruppe in die Anomalie-Erkennungseinheit 103 übertragen werden, um die benötigte Kapazität von Arbeitsspeicher der Anomalie-Erkennungseinheit 103 zu begrenzen.

Die Ein- und Ausgabeeinheit 104 umfasst beispielsweise einen Monitor, einen berührungssensitiven Bildschirm sowie eine Tastatur oder eine Maus, um die als anomal identifizierten Lastkurven sowie zweite Ähnlichkeitswerte und sonstige Ähnlichkeitsindikatoren, wie in einer Ausgabedarstellung 110 in Figur 2 dargestellt, anzuzeigen und Eingaben bezüglich der Auswahl des Analysebereichs, des Analysefensters und der Schrittweite einzugeben.

Da jede Lastkurve eindeutig einer Komponente zugeordnet ist, kann über eine als anomal identifizierte Lastkurve eine Komponente der Anlage 105 als Störungsquelle identifiziert werden. Die Komponente kann nachfolgend durch das Überwachungssystem der Anlage 105 weiter überprüft werden. Werden beispielsweise deutlich höhere Stromentnahmewerte bei einer Komponente der Anlage festgestellt, so kann die Komponente beispielsweise abgeschalten werden oder auch durch Wartungspersonal überprüft werden.

Die Ein- und Ausgabeeinheit 104 kann aber auch Parameter zur Ermittlung einer anomalen Lastkurve an die Gruppierungseinheit und/oder an die Anomalie-Erkennungseinheit weiterleiten. Neben den bereits genannten Eingabeparametern kann beispielsweise das zu verwendende Distanzmaß für die Anomalie-Erkennung und/oder die Gruppierung ausgewählt werden. Insbesondere können die Parameter zur Anomalie-Detektion durch Auswertepersonal geändert und eine erneute Anomalie-Erkennung durchgeführt werden.

Figur 3 zeigt diese Ausgabedarstellung 110 in vergrößerter Form. Im Bereich 111 werden die gewählten Einstellungen für Analysebereich AB, Analysefenster AF und Schrittweite SW sowie sonstige allgemeine Information beispielsweise zu der ausgewählten Gruppe von Lastkurven angezeigt. Im Bereich 112 werden die zusätzlichen Kenngrößen, d.h. die Rangstelle R, der Varianz-Wert Vw, das Minimum M des zweiten Ähnlichkeitswertes W(ti) sowie der Wert für die maximale Differenz D von zwei zweiten Ähnlichkeitswerten W(ti) jeder Lastkurve angezeigt. Im Bereich 113 ist eine Darstellung der eingelesenen Lastkurven über den gesamten Wertebereich des betrachteten Parameters, hier beispielsweise über der Zeit t, eingetragen. Im Bereich 114 werden die zweiten Ähnlichkeitswerte W(ti), die durch das ausgewählte Distanzmaß ermittelt wurden, über dem ausgewählten Analysebereich AB dargestellt. Im Bereich 115 ist nun die Varianzentwicklung V(tj) der im Bereich 114 dargestellten zweiten Ähnlichkeitswerte W(ti) über den Analysebereich AB dargestellt. Eine farbliche Hervorhebung von Veränderungen ermöglicht es, sehr schnell einen Überblick über sehr viele Lastkurven zu erlangen.

Hierbei sind beispielsweise alle untersuchten Lastkurven bzw. deren zweite Ähnlichkeitswerte W(ti) und Varianzentwicklung eingetragen. Es können aber auch lediglich die als anomal detektierten Lastkurven bzw. ihre zweiten Ähnlichkeitswerte W(ti) hier angezeigt werden. Auch kann eine anomale Lastkurve durch Auswahl eines der Indikatoren gewählt werden und nur noch die Angaben für diese Lastkurve angezeigt werden. Diese Darstellung ermöglicht es, die Ähnlichkeit der einzelnen Lastkurven direkt abzulesen. Hier kann man auch Lastkurven gut erkennen, welche beständig hohe oder niedrige zweite Ähnlichkeitswerte aufweisen. Sämtliche Darstellungsbereiche 111, 112, 113, 114, 115 sind dabei vorzugsweise miteinander verknüpft. Dadurch wird die Selektion in einem Bereich auf alle anderen Darstellungsbereiche entsprechend übertragen Das beschriebene Verfahren sowie das beschriebene Assistenzsystem können zur Erkennung von Störungen von unterschiedlichen Anlagen, wie beispielsweise Automatisierungsanlagen, Industrieanlagen, Energie- oder Wasserverteilungssystemen angewandt werden. Durch den zweistufigen Analyseansatz, der zuerst eine Gruppierung der Lastkurven in Gruppen ähnlicher Lastkurven und in einem zweiten Schritt eine Untersuchung der Ähnlichkeit der Lastkurven innerhalb einer Gruppe untersucht, kann sich das Verhalten einzelner Lastkurven je nach Zuordnung zu einer Gruppe durchaus ändern. Sie wird aber nur als Anomalie erkannt, falls die Gruppe sich nicht gleichzeitig in dieselbe Richtung verändert. Des Weiteren kann durch das Verfahren die Betrachtung von unterschiedlichen Anomalie-Zeitrahmen durchgeführt werden. Man kann beispielsweise gezielt nach kurzen, beispielsweise Stunden, mittel-, beispielsweise Tage, und langfristigen, beispielsweise Wochen oder Monate, Anomalien suchen.

## Patentansprüche

1. Verfahren zur Erkennung einer Störung in einer Anlage (105) durch eine Detektion von Lastkurven mit anomalem Verlauf aus einer Vielzahl von Lastkurven, wobei eine Lastkurve den Verlauf einer Kenngröße über einen Wertebereich eines betrachteten Parameters jeweils einer Komponente der Anlage (105) darstellt, mit den Verfahrensschritten:
- Einlesen (11) einer Vielzahl von Lastkurven,
- Bereitstellen (12) von mehr als einer Gruppe für Lastkurven mit ähnlichem Verlauf, wobei aus einer vorbestimmten Anzahl von Standardlastprofilen für jedes einzelne Standardlastprofil jeweils eine Gruppe bereitgestellt wird oder wobei eine Anzahl von Gruppen automatisiert mit Hilfe eines Clustering-Algorithmus für Lastkurven mit ähnlichem Verlauf ermittelt wird,
- Zuordnen (13) jeder der eingelesenen Lastkurven zu einer Gruppe, wobei entweder für jede der eingelesenen Lastkurven ein erster Ähnlichkeitswert berechnet wird, wobei der erste Ähnlichkeitswert zu jedem der Standardlastprofile berechnet wird und die eingelesene Lastkurve derjenigen Gruppe zugeordnet wird, für die der größte erste Ähnlichkeitswert ermittelt wurde, oder wobei dem Clustering-Algorithmus ein erster Ähnlichkeitswert, der eine Vorschrift zur Berechnung der Ähnlichkeit von Kurvenverläufen vorgibt, vorgegeben wird,
- Ermitteln (14) von anomalen Lastkurven innerhalb jeder einzelnen Gruppe von Lastkurven, wobei ein zweiter Ähnlichkeitswert (W(ti)) für jede Lastkurve einer Gruppe gegenüber einem Mittelwert aller restlichen Lastkurven einer Gruppe berechnet wird, und diejenigen Lastkurven als anomale Lastkurven erkannt werden, deren zweiter Ähnlichkeitswert (W(ti)) einen vorbestimmten Wert unterschreitet, und
- Ausgabe (15) der ermittelten anomalen Lastkurven und/oder Information zu ermittelten anomalen Lastkurven zur weiteren Analyse der Störung und/oder zur Überprüfung der Komponente der Anlage (105).

2. Verfahren nach Anspruch 1, wobei der Clustering-Algorithmus, ein unüberwachter Clustering-Algorithmus ist.

3. Verfahren nach Anspruch 1 oder 2, wobei jeweils ein Distanzmaß zur Berechnung des ersten und des zweiten Ähnlichkeitswertes (W(ti)) verwendet wird.

4. Verfahren nach einem der Ansprüche 1 bis 3, wobei für die Ermittlung anomaler Lastkurven
- ein Analysebereich (AB) gewählt wird, der ein Teilbereich des gesamten Parameterbereich der Lastkurven ist und auf den die Ermittlung anomaler Lastkurven eingeschränkt wird,
- eine Breite eines Analysefensters (AF) und
- eine Schrittweite (SW) aufeinanderfolgender Analysefenster (AF) gewählt wird, und
der gesamte Analysebereich (AB) mit der ausgewählten Schrittweite (SW) aufeinanderfolgende Analysefenster (AF) überdeckt wird und für jedes Analysefenster (AF) jeweils ein zweiter Ähnlichkeitswert (W(ti)) berechnet wird.

5. Verfahren nach Anspruch 4, wobei als Information zu jeder der ermittelten anomalen Lastkurven innerhalb einer Gruppe jeweils
- ein Varianz-Wert (Vw) der zweiten Ähnlichkeitswerte (W(ti)) ermittelt über den Analysebereich (AB) pro Lastkurve, und
- eine Rangstelle (R) der anomalen Lastkurve, die aus einem Vergleich der Varianz-Werte (Vw) der ermittelten anomalen Lastkurven ermittelt wird und/oder
- ein Minimalwert (M) des zweiten Ähnlichkeitswerts (W(ti)) im Analysebereich (AB) pro Lastkurve und/oder
- ein maximalen Differenzwert (D) von zweiten Ähnlichkeitswerten pro Lastkurve ermittelt, sowie
- der zweite Ähnlichkeitswert (W(ti)) und/oder eine Varianzentwicklung (V(tj)) der zweiten Ähnlichkeitswerte (W(ti)) einer oder mehrerer anomaler Lastkurven über den Analysebereich (AB) an die Ausgabeeinheit (104) ausgegeben wird.

6. Verfahren nach einem der Ansprüche 1 bis 5, wobei auch nach einem Ermitteln von anomalen Lastkurven weitere zusätzliche Lastkurven eingelesen werden und die Verfahrensschritte des Zuordnens (13), des Ermittelns (14) und der Ausgabe (15) basierend auf der Gesamtheit von Lastkurven umfassend die Vielzahl von Lastkurven und die weiteren Lastkurven durchgeführt werden.

7. Verfahren nach einem der Ansprüche 1 bis 6, wobei die Lastkurven einen zeitlichen Verlauf eines Stromverbrauchs oder eines Wasserverbrauchs in einer Strom- oder Wasserverteilungsanlage oder in einer Industrieanlage angeben.

8. Assistenzsystem zur Erkennung einer Störung in einer Anlage (105) durch eine Detektion von Lastkurven mit anomalem Verlauf aus einer Vielzahl von Lastkurven, wobei eine Lastkurve den Verlauf einer Kenngröße über einen Wertebereich eines betrachteten Parameters jeweils einer Komponente der Anlage (105) darstellt, umfassend eine Datenschnittstelle (101), eine Gruppierungseinheit (102), eine Anomalie-Erkennungseinheit (103) und eine Ein- und Ausgabeeinheit (104), wobei
- die Datenschnittstelle (101) derart ausgebildet ist eine Vielzahl von Lastkurven von Komponenten der Anlage (105) einzulesen,
- die Gruppierungseinheit (102) einen ersten Prozessor und Mikroprozessoren umfasst, die derart ausgebildet sind, mehr als eine Gruppe mit jeweils einer Gruppe für Lastkurven mit ähnlichem Verlauf bereitzustellen, wobei jeweils eine Gruppe jedem einzelnen Standardlastprofil aus einer vorbestimmten Anzahl von Standardlastprofilen zugeordnet wird oder eine Anzahl von Gruppen von Lastkurven automatisiert mit Hilfe eines Clustering-Algorithmus für Lastkurven mit ähnlichem Verlauf ermittelt werden, und jede der eingelesenen Lastkurven einer Gruppe zuzuordnen, wobei entweder für jede der eingelesenen Lastkurven ein erster Ähnlichkeitswert berechnet wird und die eingelesene Lastkurve derjenigen Gruppe zugeordnet wird, für die der größte erste Ähnlichkeitswert ermittelt wurde, oder wobei dem Clustering-Algorithmus ein erster Ähnlichkeitswert, der eine Vorschrift zur Berechnung der Ähnlichkeit von Kurvenverläufen vorgibt, vorgegeben wird,
und
- die Anomalie-Erkennungseinheit (103) einen zweiten Prozessor und Mikroprozessoren umfasst, die derart ausgebildet sind, innerhalb jeder einzelnen Gruppe anomale Lastkurven zu ermitteln, wobei ein zweiter Ähnlichkeitswert (W(ti)) für jede Lastkurve einer Gruppe gegenüber einem Mittelwert aller restlichen Lastkurven in einer Gruppe berechnet wird, und diejenigen Lastkurven als anomale Lastkurven erkannt werden, deren zweiter Ähnlichkeitswert (W(ti)) einen vorbestimmten Wert unterschreitet,
und
- die Ein- und Ausgabeeinheit (104) derart ausgebildet ist, Parameter zur Bereitstellung der verschiedenen Gruppen von Lastkurven und Parameter zur Ermittlung anomaler Lastkurven zu empfangen und an die Gruppierungseinheit (102) und/oder an die Anomalie-Erkennungseinheit (103) weiterzuleiten und die als anomal erkannten Lastkurven und Information zu den ermittelten anomalen Lastkurven zur weiteren Analyse und/oder Behebung der Störung auszugeben.

9. Assistenzsystem nach Anspruch 8, wobei die Ein- und Ausgabeeinheit (104) derart ausgebildet ist eine Eingabe zu ermöglichen für
- einen ausgewählten Analysebereich (AB), der einen Teilbereich des gesamten Wertebereichs des betrachteten Parameters der Lastkurven ist und auf den die Ermittlung anomaler Lastkurven eingeschränkt wird,
- eine Breite eines Analysefensters (AF) und/oder
- eine ausgewählte Schrittweite (SW) aufeinanderfolgender Analysefenster (AF), und
derart ausgebildet ist die Ausgabe zu ermöglichen für
- einen Varianz-Wert (Vw) des zweiten Ähnlichkeitswerts (W(ti)), der über den Analysebereich (AB) pro Lastkurve ermittelt wird, und
- eine Rangstelle (R) der anomalen Lastkurven, die aus einem Vergleich der Varianz-Werte (Vw) der ermittelten anomalen Lastkurve ermittelt wird, und/oder
- einen Minimalwert (M) des zweiten Ähnlichkeitswerts (W(ti)), der im Analysebereich (AB) pro Lastkurve ermittelt wird, und/oder
- einen Wert einer maximalen Differenz (D) von zwei zweiten Ähnlichkeitswerten (W(ti)) pro Lastkurve, sowie
- einen zweiten Ähnlichkeitswert (W(ti)) und/oder eine Varianzentwicklung (V(tj)) der zweiten Ähnlichkeitswerte (W(ti)) einer oder mehrerer Lastkurven über den Analysebereich (AB).

10. Computerprogrammprodukt mit Programmbefehlen, die bei der Ausführung des Programms durch einen Computer diesen veranlassen , die Schritte des Verfahrens nach einem der Ansprüche 1-7 durchzuführen.

11. Datenträger, der das Computerprogrammprodukt nach Anspruch 10 speichert.

## Claims

1. Method for recognizing a fault in an installation (105) by detecting load curves with an anomalous profile from a multiplicity of load curves, wherein a load curve represents the profile of a characteristic over a value range of a considered parameter, in each case of a component of the installation (105), comprising the following method steps:
- reading (11) a multiplicity of load curves,
- providing (12) more than one group for load curves with a similar profile, wherein respectively one group is provided for each individual standard load profile from a predetermined number of standard load profiles or wherein a number of groups are ascertained for load curves with a similar profile in an automated manner with the aid of a clustering algorithm,
- assigning (13) each of the read load curves to a group, wherein either a first similarity value is calculated for each one of the read load curves, wherein the first similarity value is calculated in respect of each standard load profile and the read load curve is assigned to that group for which the largest first similarity value was ascertained, or wherein a first similarity value, which predetermines a prescription for calculating the similarity of curve profiles, is predetermined for the clustering algorithm,
- ascertaining (14) anomalous load curves within each individual group of load curves, wherein a second similarity value (W(ti)) is calculated for each load curve of a group in relation to a mean value of all remaining load curves of a group, and the load curves whose second similarity value (W(ti)) drops below a predetermined value are recognized as anomalous load curves, and
- outputting (15) the ascertained anomalous load curves and/or information in respect of ascertained anomalous load curves for the further analysis of the fault and/or for checking the component of the installation (105).

2. Method according to Claim 1, wherein the clustering algorithm is an unmonitored clustering algorithm.

3. Method according to Claim 1 or 2, wherein a distance measure is used in each case for calculating the first similarity value and the second similarity value (W(ti)).

4. Method according to any one of Claims 1 to 3, wherein, for ascertaining anomalous load curves,
- an analysis range (AB) which is a portion of the entire parameter range of the load curves is selected and ascertaining anomalous load curves is restricted to said analysis range,
- a width of an analysis window (AF) and
- an increment (SW) of successive analysis windows (AF) is selected, and
the entire analysis range (AB) is covered by the selected increment (SW) of successive analysis windows (AF) and a second similarity value (W(ti)) is respectively calculated for each analysis window (AF).

5. Method according to Claim 4, wherein respectively
- a variance value (Vw) of the second similarity values (W(ti)), ascertained per load curve over the analysis range (AB), and
- a rank (R) of the anomalous load curve, which is ascertained from a comparison of the variance values (Vw) of the ascertained anomalous load curves, and/or
- a minimum value (M) of the second similarity value (W(ti)) in the analysis range (AB) per load curve and/or
- a maximum difference value (D), ascertained from second similarity values per load curve, and
- the second similarity value (W(ti)) and/or a variance expansion (V(tj)) of the second similarity values (W(ti)) of one or more anomalous load curves over the analysis range (AB) are/is output to the output unit (104) as information in respect of each one of the ascertained anomalous load curves within a group.

6. Method according to any one of Claims 1 to 5, wherein further additional load curves are read, even after anomalous load curves are ascertained, and the method steps of assigning (13), ascertaining (14), and outputting (15) are carried out on the basis of the totality of load curves, comprising the multiplicity of load curves and the further load curves.

7. Method according to any one of Claims 1 to 6, wherein the load curves specify a time profile of a current drain or of a water consumption in a current or water distribution installation or in an industrial installation.

8. Assistance system for recognizing a fault in an installation (105) by detecting load curves with an anomalous profile from a multiplicity of load curves, wherein a load curve represents the profile of a characteristic over a value range of a considered parameter, in each case of a component of the installation (105), said assistance system comprising a data interface (101), a grouping unit (102), an anomaly recognition unit (103), and an input and output unit (104), wherein
- the data interface (101) is embodied to read a multiplicity of load curves from components of the installation (105),
- the grouping unit (102) comprises a first processor and microprocessors which are embodied to provide more than one group, with a respective group being provided for load curves with a similar profile, wherein respectively one group is assigned to each individual standard load profile from a predetermined number of standard load profiles or a number of groups of load curves are ascertained in an automated manner with the aid of a clustering algorithm for load curves with a similar profile, and assign each of the read load curves to a group, wherein either a first similarity value is calculated for each one of the read load curves and the read load curve is assigned to that group for which the largest first similarity value was ascertained, or wherein a first similarity value, which predetermines a prescription for calculating the similarity of curve profiles, is predetermined for the clustering algorithm,
and
- the anomaly recognition unit (103) comprises a second processor and microprocessors which are embodied to ascertain anomalous load curves within each individual group, wherein a second similarity value (W(ti)) is calculated for each load curve of a group in relation to a mean value of all remaining load curves in a group and those load curves whose second similarity value (W(ti)) drops below a predetermined value are recognized as anomalous load curves,
and
- the input and output unit (104) is embodied to receive parameters for providing the various groups of load curves and parameters for ascertaining anomalous load curves and forward these to the grouping unit (102) and/or to the anomaly recognition unit (103), and output the load curves recognized as anomalous and information in respect of the ascertained anomalous load curves for the further analysis of and/or for rectifying the fault.

9. Assistance system according to Claim 8, wherein the input and output unit (104) is embodied to facilitate an input for
- a selected analysis range (AB) which is a portion of the entire value range of the considered parameter of the load curves, and ascertaining anomalous load curves is restricted to said analysis range,
- a width of an analysis window (AF) and/or
- a selected increment (SW) of successive analysis windows (AF), and
is embodied to facilitate the output for
- a variance value (Vw) of the second similarity value (W(ti)), which is ascertained per load curve over the analysis range (AB), and
- a rank (R) of the anomalous load curves, which is ascertained from a comparison of the variance values (Vw) of the ascertained anomalous load curve, and/or
- a minimum value (M) of the second similarity value (W(ti)), which is ascertained per load curve in the analysis range (AB), and/or
- a value of a maximum difference (D) of two second similarity values (W(ti)) per load curve, and
- a second similarity value (W(ti)) and/or a variance expansion (V(tj)) of the second similarity values (W(ti)) of one or more load curves over the analysis range (AB).

10. Computer program product with program commands, which commands, when the program is executed by a computer, prompt said computer to carry out the steps of the method according to any one of Claims 1-7.

11. Data medium which stores the computer program product according to Claim 10.

## Revendications

1. Procédé d'identification d'une défaillance dans une installation (105) grâce à une détection de courbes de charge présentant un tracé anormal parmi une pluralité de courbes de charge, dans lequel une courbe de charge représente le tracé d'une caractéristique pour une plage de valeurs d'un paramètre observé de respectivement un composant de l'installation (105), comprenant les étapes de procédé consistant à :
- entrer (11) une pluralité de courbes de charge,
- fournir (12) plus d'un groupe pour des courbes de charge présentant un tracé similaire, dans lequel respectivement un groupe est fourni pour chaque profil de charge standard individuel parmi un nombre prédéterminé de profils de charge standard ou dans lequel un nombre de groupes est déterminé de manière automatisée à l'aide d'un algorithme d'agrégation pour des courbes de charge présentant un tracé similaire,
- associer (13) chacune des courbes de charge à un groupe, dans lequel soit une première valeur de similitude est calculée pour chacune des courbes de charge entrées, la première valeur de similitude étant calculée pour chacun des profils de charge standard et la courbe de charge entrée étant associée au groupe pour lequel la plus grande première valeur de similitude a été déterminée, soit une première valeur de similitude qui précise une règle destinée au calcul de la similitude entre tracés de courbe est prescrite à l'algorithme d'agrégation,
- déterminer (14) des courbes de charge anormales à l'intérieur de chaque groupe individuel de courbes de charge, dans lequel une deuxième valeur de similitude (W (ti)) est calculée pour chaque courbe de charge d'un groupe par rapport à une valeur moyenne de toutes les courbes de charge restantes d'un groupe, et les courbes de charge dont la deuxième valeur de similitude (W (ti)) descend en dessous d'une valeur prédéterminée sont identifiées comme étant des courbes de charge anormales, et
- sortir (15) les courbes de charge anormales déterminées et/ou une information sur des courbes de charge anormales déterminées en vue d'une analyse ultérieure de la défaillance et/ou en vue d'une vérification des composants de l'installation (105).

2. Procédé selon la revendication 1, dans lequel l'algorithme d'agrégation est un algorithme d'agrégation non surveillé.

3. Procédé selon la revendication 1 ou 2, dans lequel respectivement une mesure de distance est utilisée pour le calcul des première et deuxième valeurs de similitude (W (ti)).

4. Procédé selon l'une quelconque des revendications 1 à 3, dans lequel, pour la détermination de courbes de charge anormales,
- une plage d'analyse (AB), correspondant à une sous-plage de la plage de paramètres des courbes de charge dans son ensemble et à laquelle se limite la détermination de courbes de charge anormales, est sélectionnée,
- une amplitude d'une fenêtre d'analyse (AF) et
- une taille d'incrément (SW) de fenêtres d'analyse (AF) successives est choisi, et
la plage d'analyse (AB) dans son ensemble est soumise à la taille d'incrément (SW) sélectionnée de fenêtres d'analyse (AF) successives et respectivement une deuxième valeur de similitude (W (ti)) est calculée pour chaque fenêtre d'analyse (AF).

5. Procédé selon la revendication 4, dans lequel, en tant qu'information sur chacune des courbes de charge anormales déterminées à l'intérieur d'un groupe, respectivement
- une valeur de variance (Vw) des deuxièmes valeurs de similitude (W (ti)) est déterminée sur la plage d'analyse (AB) pour chaque courbe de charge, et
- un rang (R) de la courbe de charge anormale est déterminé à partir d'une comparaison entre les valeurs de variance (Vw) des courbes de charge anormales déterminées, et/ou
- une valeur minimale (M) de la deuxième valeur de similitude (W (ti)) est déterminée pour chaque courbe de charge dans la plage d'analyse (AB), et/ou
- une valeur de différence maximale (D) de deuxième valeurs de similitude est déterminée pour chaque courbe de charge, et
- la deuxième valeur de similitude (W (ti)) et/ou une fonction de variance (V (tj)) des deuxièmes valeurs de similitude (W (ti)) d'une ou plusieurs courbe(s) de charge anormale(s) pour la plage d'analyse (AB) est sortie au niveau de l'unité de sortie (104).

6. Procédé selon l'une quelconque des revendications 1 à 5, dans lequel d'autres courbes de charge supplémentaires sont également entrées après une détermination de courbes de charge anormales et les étapes de procédé consistant à associer (13), déterminer (14) et sortir (15) sont mises en œuvre en se basant sur la totalité des courbes de charge, y compris la pluralité de courbes de charge et les autres courbes de charge.

7. Procédé selon l'une quelconque des revendications 1 à 6, dans lequel les courbes de charge montrent un tracé temporel d'une consommation d'électricité ou d'une consommation d'eau dans une installation de distribution d'électricité ou d'eau ou dans une installation industrielle.

8. Système d'assistance destiné à identifier une défaillance dans une installation (105) grâce à une détection de courbes de charge présentant un tracé anormal parmi une pluralité de courbes de charge, dans lequel une courbe de charge représente le tracé d'une grandeur pour une plage de valeurs d'un paramètre observé de respectivement un composant de l'installation (105), comprenant une interface de données (101), une unité de groupage (102), une unité d'identification d'anomalie (103) et une unité d'entrée et de sortie (104), dans lequel
- l'interface de données (101) est conçue de manière à entrer une pluralité de courbes de charge de composants de l'installation (105),
- l'unité de groupage (102) comprend un premier processeur et des microprocesseurs qui sont conçus de manière à fournir plus d'un groupe, un groupe étant respectivement associé à des courbes de charge présentant un tracé similaire, dans lequel respectivement un groupe est associé à chaque profil de charge standard individuel parmi un nombre prédéterminé de profils de charge standards ou un nombre de groupes de courbes de charge est déterminé de manière automatisée à l'aide d'un algorithme d'agrégation pour des courbes de charge présentant un tracé similaire, et de manière à associer chacune des courbes de charge entrées à un groupe, dans lequel soit une première valeur de similitude est calculée pour chacune des courbes de charge entrées, et la courbe de charge entrée est associée au groupe pour lequel la plus grande première valeur de similitude a été déterminée, soit une première valeur de similitude qui précise une règle de calcul de la similitude entre tracés de courbes est prescrite à l'algorithme d'agrégation,
et
- l'unité d'identification d'anomalie (103) comprend un deuxième processeur et des microprocesseurs qui sont conçus pour déterminer des courbes de charge anormales à l'intérieur de chaque groupe individuel, dans lequel une deuxième valeur de similitude (W (ti)) est calculée pour chaque courbe de charge d'un groupe par rapport à une valeur moyenne de toutes les courbes de charge restantes dans un groupe, et les courbes de charge dont la deuxième valeur de similitude (W (ti)) descend en dessous d'une valeur prédéterminée sont identifiées comme étant des courbes de charge anormales,
et
- l'unité d'entrée et de sortie (104) est conçue de manière à recevoir des paramètres destinés à la fourniture des différents groupes de courbes de charge et des paramètres destinés à la détermination de courbes de charge anormales et à les rediriger vers l'unité de groupage (102) et/ou l'unité d'identification d'anomalie (103) et à sortir les courbes de charge identifiées comme étant anormales et l'information sur les courbes de charge anormales déterminées en vue d'une analyse et/ou d'une correction ultérieure de la défaillance.

9. Système d'assistance selon la revendication 8, dans lequel l'unité d'entrée et de sortie (104) est conçue de manière à permettre une entrée de
- une plage d'analyse (AB) sélectionnée, qui correspond à une sous-plage de la plage de valeurs du paramètre observé des courbes de charge dans son ensemble et à laquelle se limite la détermination de courbes de charge anormales,
- une amplitude d'une fenêtre d'analyse (AF) et/ou
- une taille d'incrément (SW) sélectionnée de fenêtres d'analyse (AF) successives, et
est conçue de manière à permettre la sortie de
- une valeur de variance (Vw) de la deuxième valeur de similitude (W (ti)), qui est déterminée pour chaque courbe de charge dans la plage d'analyse (AB), et
- un rang (R) des courbes de charge anormales, qui est déterminé à partir d'une comparaison entre les valeurs de variance (Vw) des courbes de charge anormales déterminées, et/ou
- une valeur minimale (M) de la deuxième valeur de similitude (W (ti)), qui est déterminée pour chaque courbe de charge dans la plage d'analyse (AB), et/ou
- une valeur d'une différence maximale (D) entre deux deuxièmes valeurs de similitude (W (ti)) pour chaque courbe de charge, et
- une deuxième valeur de similitude (W (ti)) et/ou une fonction de variance (V (tj)) des deuxièmes valeurs de similitude (W (ti)) d'une ou plusieurs courbe(s) de charge anormale(s) pour la plage d'analyse (AB).

10. Produit-programme informatique comprenant des instructions de programme qui, lors de l'exécution du programme par un ordinateur, permettent à celui-ci de mettre en œuvre les étapes du procédé selon l'une quelconque des revendications 1 à 7.

11. Support de données qui mémorise le produit-programme informatique selon la revendication 10.
